# EUROPÄISCHE PATENTSCHRIFT

(11) **EP 0 740 439 B1**
(45) Veröffentlichungstag und Bekanntmachung des Hinweises auf die Patenterteilung: **14.07.2004**
(21) Anmeldenummer: 96105014.3
(22) Anmeldetag: 29.03.1996
(51) Int. Cl.: H04L 12/22, H04L 29/06

(54) **Verfahren, System und Teilnehmereinrichtung zum manipulationssicheren Trennen von Nachrichtenströmen**
Method, system and subscriber equipment for manipulation-proof separation of message flows
Méthode, système et équipement d'abonné pour séparation protégée contre la manipulation des circulations de messages

(30) Priorität: 28.04.1995 DE 19515681
(43) Veröffentlichungstag der Anmeldung: 30.10.1996
(73) Patentinhaber: Alcatel SEL Aktiengesellschaft, 70435 Stuttgart (DE)
(72) Erfinder: Böttle, Dietrich, 73084 Salach (DE); Banniza, Thomas-Rolf, 71282 Hemmingen (DE)
(74) Vertreter: Brose, Gerhard, Dipl.-Ing.

(56) Entgegenhaltungen:
- EP-A- 0 629 091
- WO-A-95/01019
- US-A- 5 311 593

## Beschreibung

Die Erfindung betrifft ein Verfahren, ein System und eine Teilnehmereinrichtung zum manipulationssicheren Trennen von Nachrichtenströmen, nach dem Oberbegriff der Ansprüche 1, bzw. 2, bzw. 3.

Der Übergang vom herkömmlichen Fernsprechnetz zum zukünftigen Telekommunikationsnetz hat die vielfältigsten Veränderungen zur Folge. Eine dieser Veränderungen betrifft die Netzstruktur im Teilnehmeranschlußbereich, eine andere das Hinzukommen anderer Dienste und damit verbunden die Trennung von Netzbetreiber und Diensteanbieter.

Die US 5 311 593 B beschäftigt sich mit der Frage, jedem Teilnehmer nur diejenigen Nachrichtenströme zugänglich zu machen, die an ihn gerichtet sind, auch wenn für andere Teilnehmer bestimmte Nachrichtenströme nicht von ihm ferngehalten werden können. Sie löst dieses Problem durch Verschlüsseln aller Nachrichtenströme, die nicht an diesen Teilnehmer gerichtet sind.

Aus verschiedensten Gründen wird in Zukunft im Teilnehmeranschlußbereich häufig eine Netzstruktur Verwendung finden, bei der mehrere Teilnehmer sich ein gemeinsames Medium teilen. Beispiele dafür sind sowohl Glasfaser- oder Koax-Breitbandanschlüsse als auch die Anbindung über Funk. Damit sind die Nachrichtenströme vieler Teilnehmer zumindest physikalisch auch den jeweils anderen Teilnehmern zugänglich. Über das rein physikalische Trennen der Nachrichtenströme hinaus bestehen aber noch weitere Forderungen. An erster Stelle ist hier die Abhörsicherheit zu nennen, wofür im wesentlichen Verschlüsselungen verwendet werden. Ganz wichtig ist aber auch, zu verhindern, daß jemand zu Lasten eines anderen, vor allem auf dessen Kosten, tätig werden kann. Hierfür sind verschiedene Authentisierungskonzepte verantwortlich. Auch weitere Forderungen, wie z.B. das richtige Zuordnen der Gebühren nach überprüfter Berechtigung, gehören hierher.

Das Maß an Sicherheit, das im Einzelfall als richtig anzusehen ist, schwankt dabei sowohl von Teilnehmer zu Teilnehmer wie von Dienst zu Dienst. Deshalb ist derzeit die Frage sehr aktuell, ob diese Sicherheit vom Netzbetreiber oder von den Diensteanbietern gewährleistet werden soll und an welcher Stelle im Netz die jeweiligen Maßnahmen getroffen werden sollen.

Erfindungsgemäß wird dies erreicht durch ein Verfahren nach der Lehre des Anspruchs 1, ein System nach der Lehre des Anspruchs 2 und eine Teilnehmereinrichtung nach der Lehre des Anspruchs 3. Dabei wird vom Netzbetreiber eine gewisse Grundsicherheit gewährleistet, die vom Diensteanbieter dienstespezifisch ergänzt wird.

Weitere Ausgestaltungen der Erfindung sind den Unteransprüchen zu entnehmen.

Diese Lösung ist sehr flexibel. Es braucht weder einseitig auf einen bestimmten Dienst, z.B. "Video on Demand" oder "Fernsprechen" optimiert zu werden noch ist eine extreme "Worst-Case"-Dimensionierung erforderlich. Auch ergibt sich eine organisatorische Entflechtung zum Beispiel beim Schlüsselmanagement und der Authentisierung.

Nur beispielhaft werden zunächst einige Gesichtspunkte genannt, die für die Dimensionierung im jeweiligen Einzelfall wichtig sein können:

Beim Fernsprechen genügen in der Regel einfache Verschlüsselungsund Authentisierungsmaßnahmen beim Netzbetreiber. Ein Ferngespräch ist in der Regel verhältnismäßig kurz, sodaß auch ein einfacher Schlüssel nur mit großem Aufwand zu entziffern wäre, was sich angesichts des in der Regel geringen Geheimhaltungsgrads nicht lohnt. Selbst eine versehentliche Falschzuordnung oder Nichtzuordenbarkeit der Gebühr könnte bei niedrigem Gebührenniveau akzeptiert werden, wenn zumindest die Wiederholung praktisch ausgeschlossen ist. Für höhere Gebühren könnte eine Nachauthentisierung auf höherem Sicherheitsniveau im Lauf des Gesprächs vorgesehen sein, wie dies beispielsweise schon für Gespräche mit Kreditkarten bekannt ist. Wenn der Dienst "Fernsprechen" nicht vom Netzbetreiber geleistet wird, kann zumindest die Nachauthentisierung vom Diensteanbieter erfolgen. Bei längeren Gesprächen kann vom Netzbetreiber während des Gesprächs der Schlüssel gewechselt werden. Gespräche mit höherem Geheimhaltungsgrad können als getrennter Dienst angeboten werden, wobei dann der hierfür zuständige Diensteanbieter zusätzlich zu dem vom Netzbetreiber verwendeten Schlüssel noch einen weiteren Schlüssel (und auch eine eigene Authentisierung) verwendet. Schon mit zwei einfachen, aber voneinander unabhängigen Schlüsseln kann dabei eine hohe Sicherheit erreicht werden.

Es wird auch Diensteanbieter geben, die gewisse Dienste wie Blättern im Versandhauskatalog als Vorspann für das eigentlich gewollte Verkaufsgeschäft kostenlos und für jedermann anbieten. Aus Sicht dieser Diensteanbieter bedarf es deshalb keinerlei Sicherheit. Der Kunde kann allerdings daran interessiert sein, anonym zu bleiben. Es bestünde sonst beispielsweise die Möglichkeit, durch automatisiertes Abhören und Auswerten Adressenlisten für gezielte Werbung oder gezielte Spendenaufrufe zu erstellen.

Geht nun ein Teilnehmer über vom Blättern im Versandhauskatalog zum Bestellen, so steht die Frage der Authentisierung im Vordergrund.

Beim Abonnements-Fernsehen (Pay-TV, vielleicht auch bei Video on Demand) ist vor allem der Informationsinhalt durch einen Schlüssel zu verschlüsseln, der auch längerfristig nur schwer zu entziffern ist.

Die genannten Beispiele, die beliebig erweitert oder kombiniert werden können, zeigen, daß zumindest beim Teilnehmer ein etwas höherer Aufwand erforderlich sein kann.

Zumindest bei denjenigen Teilnehmereinrichtungen, seien es die Endgeräte selbst oder zum Beispiel eine Netzabschlußeinrichtung, die für mehrere Dienste verwendbar sind, muß auch eine Anpassung an diese Dienste möglich sein. Es müssen erste Mittel vorhanden sein, die auf der Ebene des Netzbetreibers diejenigen Funktionen erfüllen, die für alle Nachrichtenströme gleichartig sind und mit denen die Grundsicherheit gewährleistet wird. Variationen, die beispielsweise durch die jeweilige beanspruchte Übertragungskapazität bedingt sind, werden hier nicht weiter berücksichtigt. Über diese ersten Mittel hinaus müssen ergänzende Mittel vorhanden sein, die auf der Diensteebene verschiedene Funktionen erfüllen. Werden verschiedene Dienste genutzt oder derselbe Dienst über verschiedene Diensteanbieter, so müssen die Funktionen der ergänzenden Mittel abschaltbar oder umschaltbar sein.

Die Funktionen, die auf der Diensteebene ablaufen, müssen, da sie von Ende zu Ende wirksam sind, zwischen den betroffenen Teilnehmern vereinbart sein. Dies wird in der Regel durch Vereinbarung mit dem jeweiligen Diensteanbieter erfolgen, der oft selbst einer der beiden Teilnehmer sein wird. Ein Ändern dieser Vereinbarung (z.B. Schlüsselwechsel) kann Teil dieser Funktionen sein.

Um den Aufwand bei der Teilnehmereinrichtung geringer zu halten, kann eine Synchronisation zwischen den Mitteln und Maßnahmen des Netzbetreibers und denen eines Diensteanbieters erfolgen. In der Teilnehmereinrichtung ist es dann z.B. möglich, einen kombinierten Schlüssel zu bilden und mit nur einer Einrichtung mittels dieses kombinierten Schlüssels sowohl auf Netzebene als auch auf Diensteebene zu verschlüsseln und zu entschlüsseln. Entsprechendes gilt für die Authentisierung.

Im folgenden wird die Erfindung anhand eines Ausführungsbeispiels unter Zuhilfenahme der beiliegenden Zeichnung weiter erläutert.
- Figur 1: zeigt ein Ausführungsbeispiel eines erfindungsgemäßen Systems mit einer erfindungsgemäßen Teilnehmereinrichtung zur Durchführung eines erfindungsgemäßen Verfahrens zum manipulationssicheren Trennen von Nachrichtenströmen.
- Figur 2: zeigt ein erstes Ausführungsbeispiel eines Verschlüsslers für ATM-Nachrichtenströme als Mittel, um Nachrichtenströme erfindungsgemäß manipulationssicher zu trennen.
- Figur 3: zeigt ein zweites Ausführungsbeispiel eines Verschlüsslers für ATM-Nachrichtenströme als Mittel, um Nachrichtenströme erfindungsgemäß manipulationssicher zu trennen.
- Figur 4: zeigt ein Ausführungsbeispiel eines Entschlüsslers für ATM-Nachrichtenströme als Mittel, um Nachrichtenströme erfindungsgemäß manipulationssicher zu trennen.

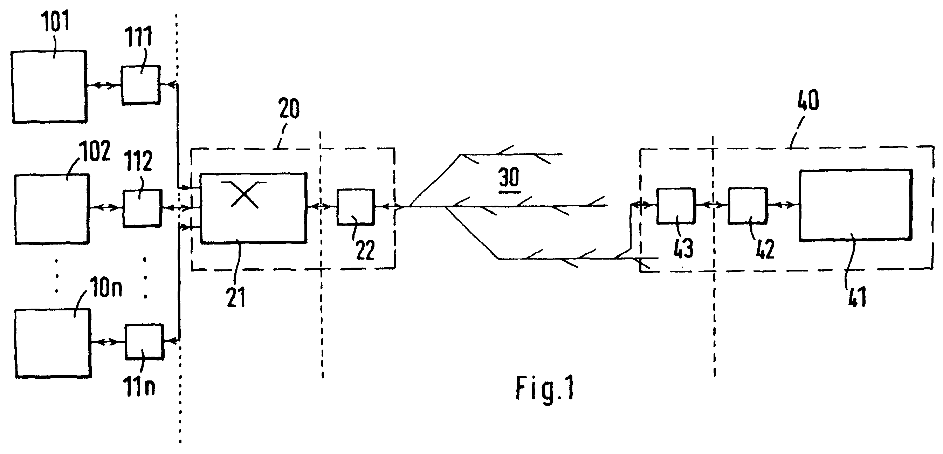

In Figur 1 werden vier Bereiche unterschieden, ein Diensteanbieterbereich 1, ein Netzbereich 2, ein Teilnehmeranschlußbereich 3 und ein Teilnehmerbereich 4.

Im Diensteanbieterbereich 1 sind die Einrichtungen von drei Diensteanbietern eingezeichnet, weitere sind durch Punkte angedeutet.

Die Einrichtungen eines jeden Diensteanbieters sind hier in zwei Teile aufgeteilt, nämlich in eine Einheit, die hier als Diensteanbietereinheit 101, 102, ..., 10n bezeichnet werden soll und eine weitere Einheit, die hier als diensteanbieterseitige Manipulationssicherungseinheit 111, 112, ..., 11n bezeichnet werden soll. Jede Diensteanbietereinheit ist über die zugeordnete Manipulationsicherungseinheit mit dem Netzbereich 2 verbunden.

Im Netzbereich 2 ist hier stellvertretend eine Vermittlungseinrichtung 21 dargestellt. Dies ist mehr symbolisch zu vestehen. Die Diensteanbieter, die hier stellvertretend auch für andere Teilnehmer stehen, müssen nicht an derselben Vermittlungsstelle angeschlossen sein wie der hier betrachtete Teilnehmeranschlußbereich 3. Die Diensteanbieter müssen auch nicht alle an derselben Vermittlungsstelle angeschlossen sein. Auch ist es nicht erforderlich, daß die Diensteanbieter über eine Vermittlungsstelle desselben Netzbetreibers angeschlossen sind, der den hier betrachteten Teilnehmeranschlußbereich 3 betreibt.

Die Vermittlungseinrichtung 21 ist hier mit einer netzseitigen Manipulationssicherungseinheit 22 zu einer Vermittlungsstelle 20 zusammengefaßt.

Die Manipulationssicherungseinheit 22 ist räumlich und organisatorisch in der Vermittlungsstelle 20 angesiedelt, gehört aber eigentlich dem Teilnehmeranschlußbereich 3 an, der hier noch durch ein breitbandiges Verteilnetz 30 mit Baumstruktur und durch eine teilnehmerseitige Netzabschluß-Manipulationssicherungseinheit 43 dargestellt ist. Zum Teilnehmeranschlußbereich 3 gehören noch weitere, hier nicht näher betrachtete Teilnehmereinrichtungen. Diese können auf die gleiche Art angeschlossen sein, sie können über Verteilnetze mit anderer Struktur oder auch über Einzelleitungen angeschlossen sein.

Im Teilnehmerbereich 4 ist ein Teilnehmerendgerät 41 und eine teilnehmerseitige Dienstabschluß-Manipulationssicherungseinheit 42 dargestellt. Sie sind zusammen mit der dem Teilnehmeranschlußbereich 3 angehörenden teilnehmerseitigen Netzabschluß-Manipulationssicherungseinheit 43 zu einer Teilnehmereinrichtung 40 zusammengefaßt.

Die teilnehmerseitige Netzabschluß-Manipulationssicherungseinheit 43 ist, zusammen mit mehreren gleichartigen Einheiten anderer Teilnehmer, das Gegenstück zur netzseitigen Manipulationssicherungseinheit 22. Die netzseitige Manipulationssicherungseinheit 22 muß deshalb, bevorzugt im Zeitmultiplex, die entsprechenden Funktionen für all diese Teilnehmer erfüllen. Es ist aber auch denkbar, daß zum Beispiel die Authentisierung für alle Teilnehmer im Zeitmultiplex durch ein und dieselbe Anordnung erreicht wird, während Entschlüsseln und Verschlüsseln durch mehrere parallel arbeitende Anordnungen teilnehmerindividuell erreicht wird.

Entsprechendes gilt für die teilnehmerseitigen Netzabschluß-Manipulationssicherungseinheiten 42 und die diensteanbieterseitigen Manipulationssicherungseinheiten 111, 112, ..., 11n. Hier kommt aber hinzu, daß die zur Manipulationssicherung zu erfüllenden Funktionen von Netzanbieter zu Netzanbieter verschieden sein können. Es reicht deshalb unter Umständen teilnehmerseitig nicht aus, einen Datensatz, insbesondere einen Codeschlüssel, auszutauschen. Es muß unter Umständen zwischen verschiedenen Einrichtungen umgeschaltet werden, beispielsweise durch Wechseln einer intelligenten Chipkarte. Für einzelne Dienste, etwa das Fernsprechen, können diese Funktionen auch entbehrlich sein und die Einrichtung 42 deshalb abschaltbar sein. Andererseits kann diensteanbieterseitig für einzelne Dienste möglicherweise stark vereinfacht werden. Beispielsweise kann ein Anbieter von Abonnements-Fernsehen auf Authentisierung ganz verzichten und für alle Abonnenten mit demselben Schlüssel verschlüsseln.

Durch Synchronisation einer der diensteanbieterseitigen Manipulationssicherungseinheiten 111, 112, ...., 11n mit der netzseitigen Manipulationssicherungseinheit 22 kann eine Zusammenfassung der teilnehmerseitigen Netzabschluß-Manipulationssicherungseinheit 43 mit der teilnehmerseitigen Dienstabschluß-Manipulationssicherungseinheit 42 erreicht werden. Da aber im Gesamtnetz mehrere Teilnehmeranschlußbereiche vorhanden sind, ist dann die Synchronisation aller netzseitigen Manipulationssicherungseinheiten erforderlich.

Nicht ausgeschlossen werden soll durch die vorliegende Erfindung, daß von einzelnen Diensteanbietern mit reinen Verteildiensten unter Umgehung des Netzbereichs 2 direkt in den Teilnehmeranschlußbereich 3 eingespeist wird. In solchen Fällen muß dann teilnehmerseitig die Netzabschluß-Manipulationssicherungseinheit 43 überbrückt werden.

Abschließend werden noch Beispiele für Verschlüssler und Entschlüssler von ATM-Datenströmen beschrieben:

Ein ATM-Datenstrom wird in der Regel Zellen (Datenpakete) enthalten, die unterschiedlichen Nachrichtenströmen angehören. Soll der gesamte Datenstrom, zum Beispiel im Verlauf einer Richtfunkverbindung, verschlüsselt übertragen werden, so kann dies nach herkömmlichen Verfahren erfolgen. Ist dagegen, zum Beispiel in einem Verteilnetz, der gesamte Datenstrom einer Vielzahl von Teilnehmern zugänglich, von denen jeder auf den ihn betreffenden Nachrichtenstrom zugreifen kann, so muß jeder dieser Nachrichtenströme für sich mit einem eigenen Schlüssel verschlüsselt übertragen werden. Der jeweilige Schlüssel kann dann aus dem unverschlüsselt übertragenen Paketkopf ermittelt werden. In einen solchen Datenstrom können natürlich auch Nachrichtenströme eingebettet sein, die sich an alle wenden, zum Beispiel Rundfunk oder Fernsehen, oder die aus sonstigen Gründen keiner Vertraulichkeit bedürfen. Diese können auch unverschlüsselt bleiben.

Für die Verschlüsselung der den Paketköpfen folgenden Nachrichtenteile selbst können die für kontinuierliche oder für in sich geschlossene Nachrichten bekannten Verfahren verwendet werden.

Eine bekannte Möglichkeit der Verschlüsselung ist die Blockkodierung, bei der die zu verschlüsselnden Daten in Blöcke aufgeteilt und jeder Block für sich als Ganzes mittels einer Abbildungsvorschrift auf einen anderen Block abgebildet wird. Eine besonders einfache Aufteilung ergibt sich, wenn jeder einem Paketkopf folgende Nachrichtenteil als solcher Block behandelt wird und wenn die Abbildungsvorschrift so ausgebildet ist, daß ein Block vor und nach der Abbildung gleich lang ist.

Bei der Blockkodierung hängt die Sicherheit gegen unbefugtes Entschlüsseln von der Länge und der Anzahl der verschlüsselt übertragenen Blöcke ab. Im vorliegenden Fall ist die Länge der Blöcke vorgegeben. Einer der derzeit untersuchten Anwendungsfälle ist das Abonnements-Fernsehen, wo die Länge der Übertragung gleich der Gültigkeitsdauer des Abonnements und die Anzahl der übertragenen Blöcke beliebig groß ist. Außerdem ist gerade hier der Anreiz zum unbefugten Entschlüsseln sehr hoch. Eine Abhilfemöglichkeit ist hier der häufige Wechsel der Schlüssel, das heißt der Abbildungsvorschrift. Wie dies auf gesicherte Weise erfolgen kann, ist nicht Gegenstand der vorliegenden Erfindung.

Eine andere Möglichkeit besteht in der Anwendung längerer Schlüssel. Hierfür bietet sich dann aber nicht mehr die Blockkodierung, sondern die Stromkodierung an. Dabei wird ein fortlaufender Datenstrom derart durch einen Algorithmus behandelt, daß sich daraus ein neuer Datenstrom ergibt, in dem aufeinanderfolgende Bits des einen Datenstroms auch aufeinanderfolgenden Bits des anderen Datenstroms entsprechen. Ein einfaches Beispiel besteht darin, sowohl den zu verschlüsselnden Datenstrom wie den zu entschlüsselnden durch eine Exklusiv-Oder-Funktion mit einer als Schlüssel dienenden Bitfolge zu verknüpfen. Eine "1" des Schlüssels läßt dabei das entsprechende Bit des Datenstroms unverändert, eine "0" dagegen invertiert dieses. Sowohl das zweimalige aufeinanderfolgende Invertieren wie auch die zweimalige unveränderte Weitergabe ergibt im Ergebnis die ursprüngliche unverschlüsselte Bitfolge. Der Schlüssel kann dabei beliebig lang und damit beliebig sicher sein. Die Handhabung wird dabei aber schwieriger. Ein nicht zu langer gelegentlich gewechselter Schlüssel wird auch hier angebracht sein.

Bei dieser Art der Verschlüsselung, bei der über die Grenzen eines einem Paketkopf folgenden Nachrichtenteils hinweg verschlüsselt oder entschlüsselt wird, muß der Vorgang des Verschlüsselns bzw. Entschlüsselns am Ende eines Nachrichtenteils unterbrochen werden, bis der Anfang des nächsten zur selben Verbindung gehörigen Nachrichtenteils vorliegt.

Hier ergibt sich auch das Problem, die Vorgänge des Verschlüsselns und des Entschlüsselns aufeinander zu synchronisieren, vor allem die Synchronisation im Verlauf einer Übertragung zu überprüfen. Es gibt Anwendungen, wo im Paketkopf die Pakete einer Verbindung durchnumeriert sind. Diese Numerierung kann unter Umständen zur Synchronisation der Ver- und Entschlüsselung mit herangezogen werden.

Ist keine solche Numerierung vorhanden oder eine solche zum Zwecke der Synchronisation nicht geeignet, so werden in den zu verschlüsselnden Datenstrom geeignete Synchronisationswörter eingefügt.

Die der Synchronisation der Entschlüsselung dienenden Synchronisationswörter müssen vor der Entschlüsselung schon erkannt werden können, weil sie Voraussetzung für die Entschlüsselung sind. Sie dürfen deshalb nicht mit verschlüsselt werden. Auch laufende Nummern, die der Durchnumerierung der Pakete dienen, sind möglicherweise von der Verschlüsselung auszunehmen, wenn im Laufe der Übermittlung auf sie zugegriffen werden soll. Gleiches gilt auch für alle anderen Nachrichtenteile, die in irgendeiner Weise der Sicherung der Übertragung dienen. Sie werden damit letztlich dem Paketkopf zugeordnet.

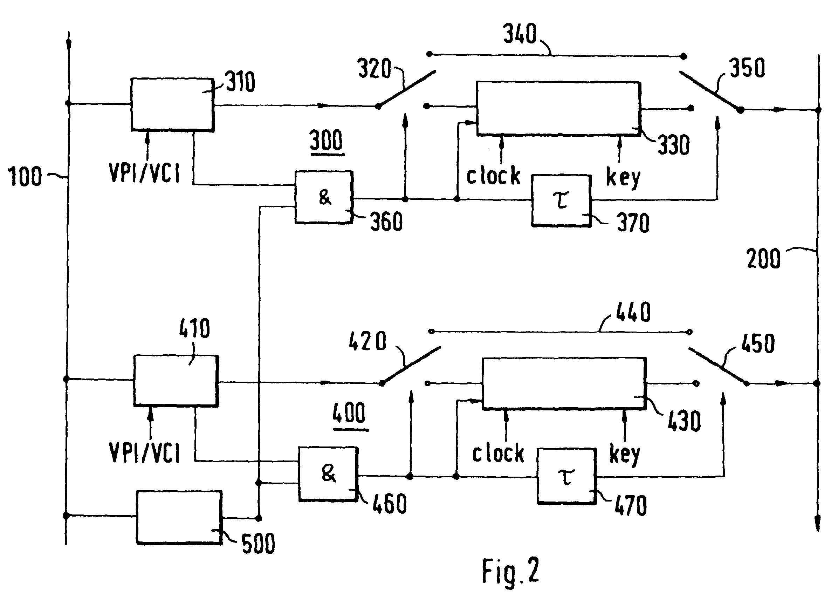

Der Verschlüssler nach Figur 2 weist eine Eingangsleitung 100, eine Ausgangsleitung 200, ein erstes und ein zweites Verschlüsselungsteil 300 bzw. 400 und ein Synchronisationsteil 500 auf.

Die beiden Verschlüsselungsteile sind untereinander gleich aufgebaut. Jedes Verschlüsselungsteil ist zur Verschlüsselung eines Nachrichtenstroms vorgesehen. Die Zahl von gerade zwei Verschlüsselungsteilen ist deshalb nur sehr symbolisch zu sehen. In der Regel werden mehrere Verschlüsselungsteile vorhanden sein. Aber auch Verschlüssler mit nur einem Verschlüsselungsteil können sinnvoll sein.

Jedes Verschlüsselungsteil weist ein Filter 310 bzw. 410, einen ersten Umschalter 320 bzw. 420, einen Verwürfler 330 bzw. 430, eine Umwegleitung 340 bzw. 440, einen zweiten Umschalter 350 bzw. 450, ein Und-Gatter 360 bzw. 460 und ein Verzögerungsglied 370 bzw. 470 auf.

Der auf der Eingangsleitung 100 ankommende Datenstrom wird den Filtern 310 und 410 und dem Synchronisationsteil 500 zugeführt. Jedem Filter ist die Kennung eines Nachrichtenstroms zugewiesen. Sie wird hier als VPI/VCI bezeichnet und kennzeichnet den virtuellen Pfad (virtual path identifier) und den virtuellen Kanal (virtual channel identifier), die diesem Nachrichtenstrom zugewiesen sind. Jedes Filter läßt nur die Pakete des zugehörigen Nachrichtenstroms passieren und meldet dies gleichzeitig dem zugehörigen Und-Gatter.

Das Synchronisationsteil 500 leitet aus dem ankommenden Datenstrom eine Maske ab, die diejenigen Teile des Datenstroms, die verschlüsselt werden dürfen, gegenüber den anderen maskiert. Diese Maske wird allen Verschlüsselungsteilen über deren Und-Gatter angeboten. Ob dann tatsächlich etwas verschlüsselt wird, hängt davon ab, ob das entsprechende Filter überhaupt eine Nachricht passieren läßt.

Der Ausgang des Und-Gatters 360 schaltet den ersten Umschalter 320, aktiviert den Verwürfler 330 und schaltet, über das Verzögerungsglied 370, den zweiten Umschalter 350. Dem Verwürfler 330 wird weiter ein Takt clock und ein Schlüssel key zugeführt. Die zu verschlüsselnden Teile des Nachrichtenstroms werden über den Umschalter 320, den Verwürfler 330 und den Umschalter 350 der Ausgangsleitung 200 zugeführt. Die nicht zu verschlüsselnden Teile werden mittels der beiden Umschalter 320 und 350 und der Umwegleitung 340 am Verwürfler vorbeigeleitet.

Das zweite Verschlüsselungsteil 400 arbeitet genauso, ebenso jedes etwaige weitere. Die jeweilige Kennung VPI/VCI und der jeweilige Schlüssel key werden im Zuge eines Verbindungsaufbaus eingestellt. Der Schlüssel key kann während der Verbindung ausgetauscht werden. Einstellung von Kennung und Schlüssel und etwaiger Schlüssel-Tausch erfolgen wie die Einstellung und Änderung anderer Parameter einer Verbindung. Dies ist nicht Gegenstand der vorliegenden Erfindung. Für bestimmte Fälle könnten auch unveränderliche und fest eingestellte Parameter verwendet werden.

Die Verwendung eines Verwürflers erfolgt hier nur beispielhaft. Hier kann jede Einrichtung verwendet werden, die einen passenden Verschlüsselungsmechanismus realisiert. Die Verzögerung des Verzögerungsglieds 370 muß, ebenso wie die Laufzeit der Umwegleitung 340, der Verarbeitungszeit im Verwürfler angepaßt sein.

Sofern der verwendete Schlüssel und die Paketanfänge nicht zueinander synchron sind, muß noch in geeigneter Weise eine zusätzliche Synchronisation im Verwürfler erfolgen. Inwieweit das Synchronisationsteil dabei in den Verwürfler hineinwirkt, hängt von der jeweils verwendeten Verschlüsselungsart ab. Dies ist insoweit nicht erfindungspezifisch.

Sind im Datenstrom auf der Eingangsleitung 100 noch weitere Datenpakete enthalten, etwa Steuerpakete oder Leerpakete, so müssen diese mittels eines weiteren Filters mit der entsprechenden Verzögerung zur Ausgangsleitung 200 durchgeschaltet werden.

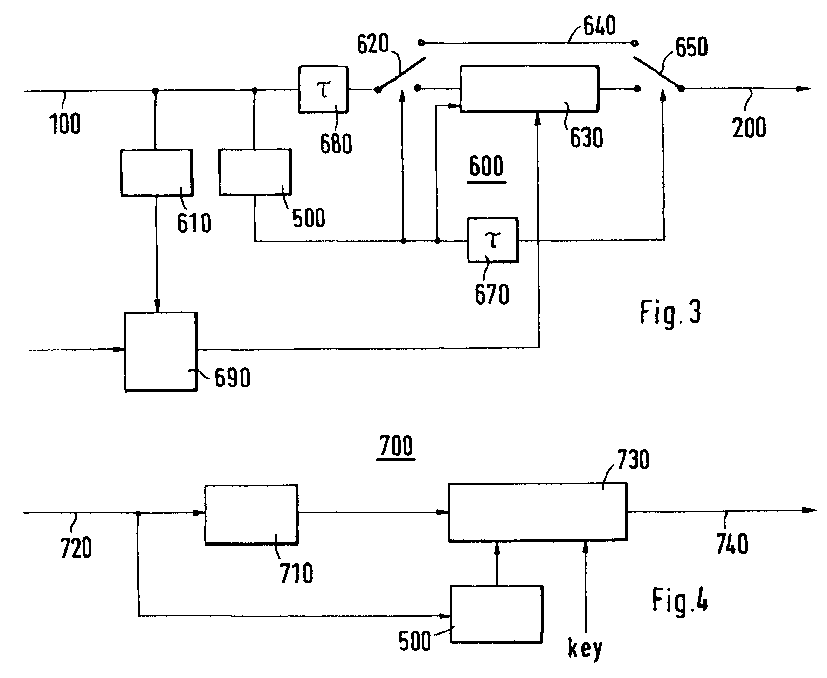

Der Verschlüssler nach Figur 3 ist ähnlich aufgebaut wie der nach Figur 2. Zwischen der Eingangsleitung 100 und der Ausgangsleitung 200 liegt hier ein Verschlüsselungsteil 600 und das Synchronisationsteil 500.

Das Verschlüsselungsteil 600 weist in diesem Beispiel außer einem Filter 610, einem ersten Umschalter 620, einem Verwürfler 630, einer Umwegleitung 640, einem zweiten Umschalter 650 und einem Verzögerungsglied 670 noch ein weiteres Verzögerungsglied 680 und eine Schlüsselliste 690 auf.

Der Aufbau und auch die Wirkungsweise ist weitgehend gleich wie im vorigen Beispiel, jedoch wird hier ein Verschlüsselungsteil im Zeitmultiplex für die Verschlüsselung mehrerer Nachrichtenströme verwendet.

Das Filter 610 filtert hier die Paketköpfe soweit aus dem Datenstrom aus, wie dies zum Bestimmen des jeweils erforderlichen Schlüssels erforderlich ist. Die Paketköpfe werden aber auch im normalen Datenstrom weiter mitgeführt. Die aus den Paketköpfen ausgefilterten Informationen dienen der Adressierung der Schlüsselliste 690, die jeweils den richtigen Schlüssel an den Verwürfler 630 liefert. Die Eintragung der Schlüssel in die Schlüsselliste erfolgt nach Art der Einstellung eines Verbindungsparameters nach bekannten Verfahren. Für Steuer- und Leerpakete wie auch für nicht zu verschlüsselnde Nachrichtenströme kann ein Schlüssel eingetragen sein, der im Verwürfler keine Veränderung der Nachricht bewirkt.

Das weitere Verzögerungsglied 680 gleicht gegenüber dem Beispiel nach Figur 2 die Verzögerung des Filters und des Und-Glieds aus.

Der Entschlüssler 700 nach Figur 4 weist eine Eingangsleitung 720, ein Filter 710, einen Entwürfler 730, eine Ausgangsleitung 740 und ein Synchronisationsteil 500 auf.

Das Filter 710 blendet einen einzigen Nachrichtenstrom aus dem Datenstrom auf der Eingangsleitung 720 aus und führt ihn dem Entwürfler 730 zu, der mit demselben Schlüssel key die Wirkung des zugehörigen Verwürflers wieder aufhebt.

Im gezeigten Beispiel wurde unterstellt, daß am Ausgang des Entschlüsslers nur noch der reine Nachrichtenstrom benötigt wird. Das Filter 710 läßt deshalb in diesem Fall nur die Nachrichtenteile der ausgewählten Pakete durch. Eine Umleitung der Paketköpfe um den Entwürfler ist deshalb nicht erforderlich. Das Synchronisationsteil 500 dient hier ausschließlich der Synchronisation und nicht auch der Maskierung. Eine Umwandlung der ausgeblendeten Nachrichtenteile in einen kontinuierlichen Datenstrom wird hier nicht weiter beschrieben.

Bezüglich anderer Maßnahmen zum manipulationssicheren Trennen von Datenströmen, insbesondere bezüglich des Authentisierens, sind keine Besonderheiten zu beachten, wenn ATM als Übertragungsart verwendet wird.

## Patentansprüche

1. Verfahren zum manipulationssicheren Trennen von Nachrichtenströmen, die im Teilnehmeranschlußbereich (3) eines Kommunikationsnetzes über ein mehreren Teilnehmern gemeinsames Medium (30) übertragen werden, **dadurch gekennzeichnet, daß** zur Übertragung über das gemeinsame Medium erste Maßnahmen (22, 43) zum manipulationssicheren Trennen von Nachrichtenströmen ergriffen werden, die für alle Nachrichtenströme gleichartig sind und daß zwischen mindestens einem über das gemeinsame Medium mit dem Kommunikationsnetz verbundenen Teilnehmer (4) und einem weiteren Teilnehmer von Ende zu Ende ergänzende Maßnahmen (111, 112, ..., 11n; 42) ergriffen werden, die zwischen diesen Teilnehmern für diese Verbindungen vereinbart wurden.

2. System zum manipulationssicheren Trennen von Nachrichtenströmen, die im Teilnehmeranschlußbereich (3) eines Kommunikationsnetzes über ein mehreren Teilnehmern gemeinsames Medium (30) übertragen werden, **dadurch gekenrszeichn daß** zur Übertragung über das gemeinsame Medium erste Mittel (22, 43) zum manipulationssicheren Trennen von Nachrichtenströmen vorhanden sind, die für alle Nachrichtenströme gleichartig sind und daß für Verbindungen zwischen mindestens einem über das gemeinsame Medium mit dem Kommunikationsnetz verbundenen Teilnehmer (4) und einem weiteren Teilnehmer bei diesen Teilnehmern ergänzende Mittel (111, 112, ..., 11n; 42) vorhanden sind, um Maßnahmen zu ergreifen, die zwischen diesen Teilnehmern für diese Verbindungen vereinbart sind.

3. Teilnehmereinrichtung (40) mit Mitteln zum manipulationssicheren Trennen der Nachrichtenströme dieses Teilnehmers von Nachrichtenströmen anderer Teilnehmer, wenn diese Teilnehmereinrichtung (40) verwendet wird zum Anschluß eines Teilnehmers (4) an ein Kommunikationsnetz, über ein Medium (30), das im Teilnehmeranschlußbereich (3) mehreren Teilnehmern gemeinsam zum Anschluß dient, **dadurch gekennzeichnet, daß** erste Mittel (22, 43) zum manipulationssicheren Trennen von Nachrichtenströmen und ergänzende Mittel (111, 112, ..., 11n; 42), vorhanden sind wobei die Funktionen der ergänzenden Mittel zwischen dem Teilnehmer und einem weiteren Teilnehmer für Verbindungen zwischen diesen Teilnehmern vereinbart sind.

4. Verfahren nach Anspruch 1, **dadurch gekennzeichnet, daß** die ersten und die ergänzenden Maßnahmen solche zur Authentisierung sind.

5. Verfahren nach Anspruch 1, **dadurch gekennzeichnet, daß** die ersten und die ergänzenden Maßnahmen solche zur Verschlüsselung und Entschlüsselung sind.

6. Teilnehmereinrichtung nach Anspruch 3, **dadurch gekennzeichnet, daß** die ersten Mittel (43) und die ergänzenden Mittel (42) Mittel solche zur Verschlüsselung und Entschlüsselung sind.

7. Verfahren nach Anspruch 5, **dadurch gekennzeichnet, daß** die ersten und die ergänzenden Maßnahmen aufeinander synchronisiert sind.

8. Teilnehmereinrichtung nach Anspruch 6, **dadurch gekennzeichnet, daß** die ersten Mittel (43) und die ergänzenden Mittel (42)so ausgebildet sind, daß ihre Funktionen gemeinsam ausgeführt werden.

9. Teilnehmereinrichtung nach Anspruch 3 oder 8, **dadurch gekennzeichnet, daß** die ergänzenden Mittel (42) ab- oder umschaltbar sind.

## Claims

1. Method of manipulation-proof separation of message flows which are transmitted in the local loop area (3) of a communication network via a medium (30) which is common to multiple subscribers, **characterized in that** for transmission via the common medium, first actions (22, 43) for manipulation-proof separation of message flows are taken, and are the same for all message flows, and that between at least one subscriber (4) who is connected to the communication network via the common medium and another subscriber, additional actions (111, 112, ..., 11n; 42), which are agreed between these subscribers for these calls, are taken from end to end.

2. System for manipulation-proof separation of message flows which are transmitted in the local loop area (3) of a communication network via a medium (30) which is common to multiple subscribers, **characterized in that** for transmission via the common medium, first means (22, 43) for manipulation-proof separation of message flows are present, and are the same for all message flows, and that for calls between at least one subscriber (4) who is connected to the communication network via the common medium and another subscriber, additional means (111, 112, ..., 11n; 42) are present on these subscribers' premises, to take actions which are agreed between these subscribers for these calls.

3. Subscriber equipment (40) with means for manipulation-proof separation of message flows of this subscriber from message flows of other subscribers, if this subscriber equipment (40) is used to connect a subscriber (4) to a communication network via a medium (30) which is used in common to connect multiple subscribers in the local loop area (3), **characterized in that** first means (22, 43) for manipulation-proof separation of message flows and additional means (111, 112, ..., 11n; 42) are present, the functions of the additional means being agreed between the subscriber and another subscriber for calls between these subscribers.

4. Method according to Claim 1, **characterized in that** the first and additional actions are those for authentication.

5. Method according to Claim 1, **characterized in that** the first and additional actions are those for encryption and decryption.

6. Subscriber equipment according to Claim 3, **characterized in that** the first means (43) and additional means (42) are those for encryption and decryption.

7. Method according to Claim 5, **characterized in that** the first and additional actions are synchronised with each other.

8. Subscriber equipment according to Claim 6, **characterized in that** the first means (43) and additional means (42) are in such a form that their functions are carried out in common.

9. Subscriber equipment according to Claim 3 or 8, **characterized in that** the additional means (42) can be switched off or over.

## Revendications

1. Procédé pour la séparation protégée contre la manipulation de flux de messages, qui sont transmis dans la zone de raccordement d'abonnés (3) d'un réseau de communication au moyen d'un support (30) commun à plusieurs abonnés, **caractérisé en ce que**, pour la transmission au moyen du support commun, des premières mesures (22, 43) sont prises pour la séparation protégée contre la manipulation de flux de messages qui sont de même nature pour tous les flux de messages, et **en ce que** entre au moins un abonné (4) relié par le support commun avec le réseau de communication et un autre abonné, on prend des mesures complémentaires (111, 112, ..., 11n ; 42) de bout en bout qui ont été convenues entre ces abonnés pour ces liaisons.

2. Système pour la séparation protégée contre la manipulation de flux de messages, qui sont transmis dans la zone de raccordement d'abonnés (3) d'un réseau de communication au moyen d'un support (30) commun à plusieurs abonnés, **caractérisé en ce que**, pour la transmission au moyen du support commun, des premiers moyens (22, 43) pour la séparation protégée contre la manipulation de flux de messages sont présents, qui sont du même type pour tous les flux de messages, et **en ce que** pour des liaisons entre au moins un abonné (4) relié au moyen du support commun au réseau de communication et un autre abonné, des moyens complémentaires (11, 112, ..., 11n ; 42) sont présents chez ces abonnés pour prendre des mesures qui sont convenues entre ces abonnés pour ces liaisons.

3. Equipement d'abonné (40) avec des moyens pour la séparation protégée contre la manipulation des flux de messages de cet abonné de flux de messages d'autres abonnés, si cet équipement d'abonné (40) est utilisé pour le raccordement d'un abonné (4) à un réseau de communication au moyen d'un support (30), qui sert dans la zone de raccordement d'abonnés (3) conjointement à plusieurs abonnés pour le raccordement, **caractérisé en ce que** des premiers moyens (22, 43) pour la séparation protégée contre la manipulation de flux de messages et des moyens complémentaires (111, 112, ... 11n ; 42) sont présents, les fonctions des moyens complémentaires étant convenues entre l'abonné et un autre abonné pour des liaisons entre ces abonnés.

4. Procédé selon la revendication 1, **caractérisé en ce que** les premières mesures et les mesures complémentaires sont des mesures pour l'authentification.

5. Procédé selon la revendication 1, **caractérisé en ce que** les premières mesures et les mesures complémentaires sont des mesures pour le codage et le décodage.

6. Equipement d'abonné selon la revendication 3, **caractérisé en ce que** les premiers moyens (43) et les moyens (42) complémentaires sont des moyens pour le codage et le décodage.

7. Procédé selon la revendication 5, **caractérisé en ce que** les premiers moyens (43) et les moyens (42) complémentaires sont synchronisés entre eux.

8. Equipement d'abonné selon la revendication 6, **caractérisé en ce que** les premiers moyens (43) et les moyens (42) complémentaires sont conçus de telle sorte que leurs fonctions sont exécutées ensemble.

9. Equipement d'abonné selon la revendication 3 ou 8, **caractérisé en ce que** les moyens (42) complémentaires peuvent être déconnectés ou commutés.
